Europäisches Patentamt

European Patent Office

Office européen des brevets

(11) Numéro de publication : **0 096 632**
**B1**

(12) **FASCICULE DE BREVET EUROPÉEN**

(45) Date de publication du fascicule du brevet :
**10.09.86**

(21) Numéro de dépôt : **83401109.0**

(22) Date de dépôt : **01.06.83**

(51) Int. Cl.⁴ : **B 60 N   1/08**

(54) **Monture de siège pour véhicule automobile.**

(30) Priorité : **09.06.82 FR 8210043**

(43) Date de publication de la demande :
**21.12.83 Bulletin 83/51**

(45) Mention de la délivrance du brevet :
**10.09.86 Bulletin 86/37**

(84) Etats contractants désignés :
**DE GB IT SE**

(56) Documents cités :
**FR-A- 2 332 882**
**FR-A- 2 437 955**
**FR-A- 2 489 763**
**GB-A-   457 495**
**GB-A-   517 880**
**GB-A-   754 290**
**GB-A- 1 546 166**

(73) Titulaire : **COMPAGNIE INDUSTRIELLE DE MECANIS-MES en abrégé C.I.M. Société dite:**
**6, Rue Barbès**
**F-92302 Levallois-Perret (FR)**

(72) Inventeur : **Degremont, Dominique**
**Grand Pont**
**F-45600 Sully-sur-Loire (FR)**

(74) Mandataire : **Polus, Camille et al**
**c/o Cabinet Lavoix 2, Place d'Estienne d'Orves**
**F-75441 Paris Cedex 09 (FR)**

EP 0 096 632 B1

Jouve, 18, rue St-Denis, 75001 Paris, France

## Description

La présente invention est relative à une monture de siège de véhicule automobile, du type comprenant deux paires de glissières respectivement intérieure et extérieure comprenant chacune une glissière fixe solidaire du plancher du véhicule et une glissière mobile qui porte un levier de déverrouillage monté rotatif autour d'un axe horizontal, et un organe essentiellement rigide d'actionnement synchronisé des deux leviers.

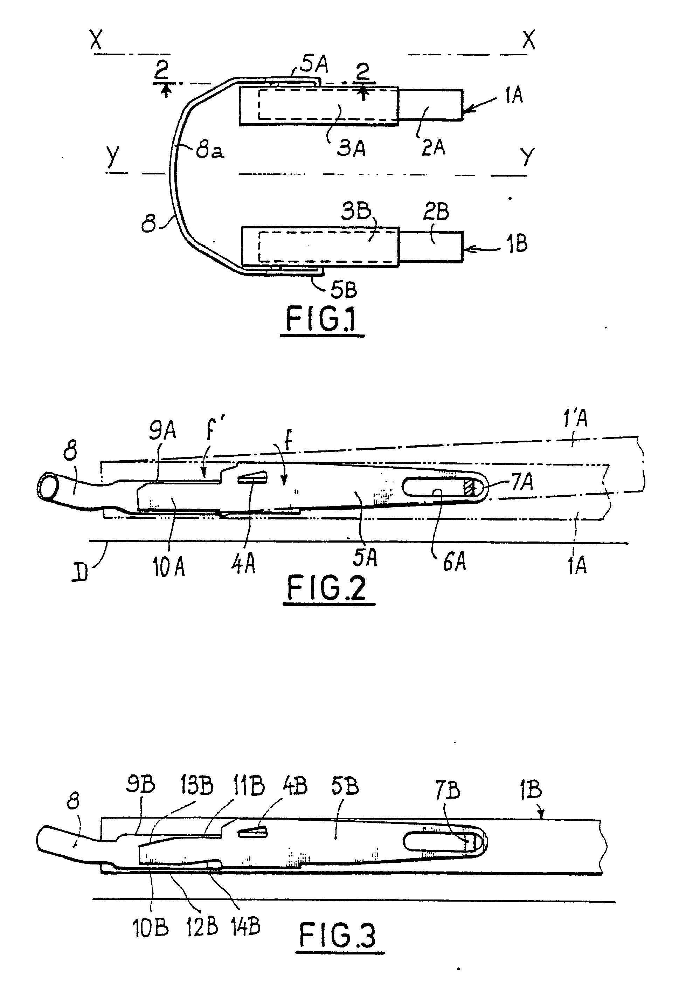

Une monture de siège classique de ce type (décrite par exemple par le FR-A-2 437 955) est illustrée schématiquement aux Figures 1 et 2 des dessins annexés, respectivement en plan et en vue latérale, à plus grande échelle, en coupe suivant la ligne 2-2 de la Figure 1.

Les deux paires de glissières 1A et 1B de cette monture sont toutes deux situées du même côté (le côté gauche dans l'exemple représenté) de l'axe longitudinal X-X du véhicule. Dans ce qui suit, on désignera par le même numéro les éléments correspondants des deux paires de glissières, affectés des suffixes A et B lorsqu'il s'agit de la paire la plus proche de l'axe X-X ou de celle la plus éloignée de cet axe, respectivement.

La monture est symétrique par rapport à son axe médian Y-Y, qui est parallèle à l'axe X-X. Chaque paire de glissières 1 comprend une glissière intérieure fixe 2 fixée au plancher du véhicule et une glissière extérieure mobile 3 emboîtée sur celle-ci avec interposition d'éléments de roulement (non représentés). Les glissières 1A ont été schématisées en traits mixtes sur la Fig. 2, qui porte également une ligne de référence horizontale D.

Sur la patte horizontale rabattue 4 prévue sur le côté extérieur (par rapport à l'axe X-X) de la glissière 3 est monté oscillant un levier de déverrouillage 5 de forme générale plane. L'extrémité arrière de ce levier présente une boutonnière horizontale 6 traversée par un ergot 7 appartenant à un organe de verrouillage. Ce dernier est constitué par un petit cylindre disposé dans le chemin de roulement adjacent au levier 5 ; sur le côté de ce cylindre opposé à l'ergot 7 fait saillie un bec qui traverse une ouverture de la glissière mobile 3.

Quand le levier 5 se trouve dans sa position de repos représentée à la Fig. 2, dans laquelle il est maintenu par un ressort (non représenté), le bec de l'organe de verrouillage pénètre dans l'une d'une série d'ouvertures de la glissière fixe 2, ce qui détermine une position longitudinale fixe de la glissière mobile. Pour modifier cette position, on fait tourner le levier 5 dans son plan vertical dans le sens horaire (en considérant la Fig. 2) f autour de la patte 4 ; ce mouvement entraîne vers le bas l'ergot 7, ce qui fait sortir le bec de l'ouverture de la glissière fixe et permet de déplacer l'autre glissière. Lorsque la nouvelle position désirée est atteinte, on relâche le levier 5, lequel revient à sa position de départ sous l'action de son ressort de rappel, en permettant au bec de pénétrer dans l'ouverture en regard de la glissière fixe 2.

Les deux leviers 5 sont actionnés en synchronisme par un organe rigide unique 8 en forme d'arceau tubulaire. Les extrémités aplaties 9 de cet arceau sont dirigées vers l'arrière et emboîtées sur les queues avant 10 des deux leviers 5, tandis que sa partie médiane 8a dépasse à l'avant du siège. Ainsi, le déverrouillage simultané des deux paires de glissières s'effectue en soulevant la partie médiane 8a de l'arceau, et leur verrouillage simultané en la relâchant.

Dans les montures connues de ce type, on a constaté le phénomène indésirable suivant : en cas de choc frontal, la partie du plancher du véhicule située près de l'axe X-X est souvent nettement plus déformable que celles situées près des longerons latéraux du châssis du véhicule. Par suite, la paire de glissières extérieure 1B reste pratiquement horizontale, tandis que l'autre paire de glissières 1A bascule vers l'avant, à peu près autour de son extrémité avant, comme indiqué en trait mixte en 1'A à la Fig. 2.

Or, chaque extrémité de l'arceau 8 est rigidement solidaire de la queue 10 correspondante, et les leviers 5 se trouvent dans une position de butée qui les empêche de tourner dans le sens antihoraire f'. Par conséquent, lorsque la paire de glissières 1A bascule vers l'avant, l'extrémité 9B de l'arceau ne peut pas suivre ce mouvement et, en prenant appui sur la queue 10B, immobilise tout l'arceau, et en particulier son autre extrémité 9A et, par suite, le levier 5A. Il se produit donc un mouvement relatif entre la paire de glissières 1A et le levier 5A qui correspond au mouvement de déverrouillage de cette paire de glissières. En d'autres termes, il existe un risque sérieux de voir la paire de glissières 1A se déverrouiller en cas de choc, notamment lorsque, suivant une tendance qui se développe actuellement, les boucles des ceintures de sécurité du véhicule se fixent directement sur le siège.

On comprend que le même problème se présenterait du côté extérieur si l'arceau 8 était du type actionné par enfoncement et non plus par soulèvement, et qu'il se présente plus généralement pour toutes les montures dans lesquelles deux leviers de déverrouillage synchronisés oscillent dans des plans verticaux parallèles à l'axe X-X.

La présente invention a pour but de fournir une monture du même type qui garantisse le maintien du verrouillage des deux paires de glissières en cas de choc.

A cet effet, l'invention a pour objet une monture du type précité, caractérisée en ce qu'elle comprend des moyens qui permettent à la paire de glissières intérieure 1A, la plus proche de l'axe longitudinal X-X du véhicule, de basculer vers l'avant par rapport à l'autre paire de glissières extérieure 1B en entraînant avec elle son levier intérieur 5A, au moins dans le cas d'un basculement relatif brusque, et lesdits moyens permettent à l'extrémité extérieure 9B de l'organe d'actionnement 8 de basculer librement vers l'avant par rapport au levier extérieur 5B de la glissière extérieure 3B en réalisant ainsi une liaison unidirectionnelle entre ledit levier extérieur et l'extrémité extérieure 9B, tandis que l'autre extrémité 9A de cet organe est rigidement solidaire du levier intérieur 5A.

Dans un premier mode de réalisation de l'invention lesdits moyens permettent à l'extrémité extérieure 9B de l'organe d'actionnement 8 de basculer librement vers l'avant par rapport au levier extérieur 5B, tandis que l'autre extrémité 9A de cet organe est rigidement solidaire du levier intérieur 5A.

Ceci peut s'obtenir très facilement, avec une modification mineure des montures classiques, lorsque l'extrémité extérieure 9B de l'arceau 8 est tubulaire et emmanchée sur l'extrémité avant 10B du levier extérieur 5B, laquelle présente deux chanfreins parallèles et inclinés vers l'avant, le chanfrein supérieur étant décalé vers l'avant par rapport au chanfrein inférieur.

Dans une variante, l'extrémité extérieure 9B de l'arceau 8 est articulée sur l'extrémité avant 10B du levier extérieur 5B, et une butée l'empêche de basculer dans le seul sens du déverrouillage par rapport à ce levier.

Dans d'autres modes de réalisation de l'invention :

— lesdits moyens permettent au levier extérieur 5B de s'incliner vers l'avant par rapport à l'organe de verrouillage 7B associé, chaque levier étant rigidement relié à l'arceau 8 et cet organe de verrouillage possédant des moyens de rappel propres vers sa position de verrouillage ;

— l'arceau 8 est relié rigidement aux deux leviers 5 et est constitué de deux moitiés reliées l'une à l'autre avec possibilité de rotation, notamment par emmanchement tubulaire ;

— le mécanisme de déverrouillage possède un point affaibli de façon à céder en cas de basculement relatif brusque de la paire de glissières intérieure 1A par rapport à l'autre 1B.

Les figures 3 à 8 des dessins annexés illustrent schématiquement quelques exemples de réalisation de la monture suivant l'invention :

la figure 3 est une vue en élévation latérale de la paire de glissières extérieure d'une monture suivant l'invention, en service normal ;

les figures 4 et 5 sont des vues respectivement analogues aux Fig. 2 et 3 de la paire de glissières intérieure et de la paire de glissières extérieure, respectivement, de la même monture, après un choc frontal ;

la figure 6 est une vue à plus grande échelle du levier de la paire de glissières extérieure ;

les figures 7 et 8 sont des vues analogues à la Fig. 3 montrant respectivement la paire de glissières extérieure de deux autres modes de réalisation de la monture suivant l'invention.

Dans l'exemple des Fig. 3 à 6, la monture est dans l'ensemble identique à celle des Fig. 1 et 2.

Elle n'en diffère que par la forme de la queue 10B du levier 5B de la paire de glissières extérieure 1B. En effet, alors qu'aux Fig. 1 et 2 cette queue présentait une forme rectangulaire s'adaptant exactement dans l'extrémité tubulaire aplatie 9B de l'arceau 8 et délimitée par des chants supérieur 11B et inférieur 12B parallèles et horizontaux, ces deux chants sont maintenant tronqués par deux chanfreins supérieur 13B et inférieur 14B parallèles l'un à l'autre et décalés longitudinalement.

Plus précisément, le chanfrein supérieur 13B s'étend vers le bas et vers l'avant à partir du milieu de la longueur du chant 11B, et le chanfrein inférieur 14B s'étend vers le haut et vers l'arrière à partir du milieu de la longueur du chant 12B.

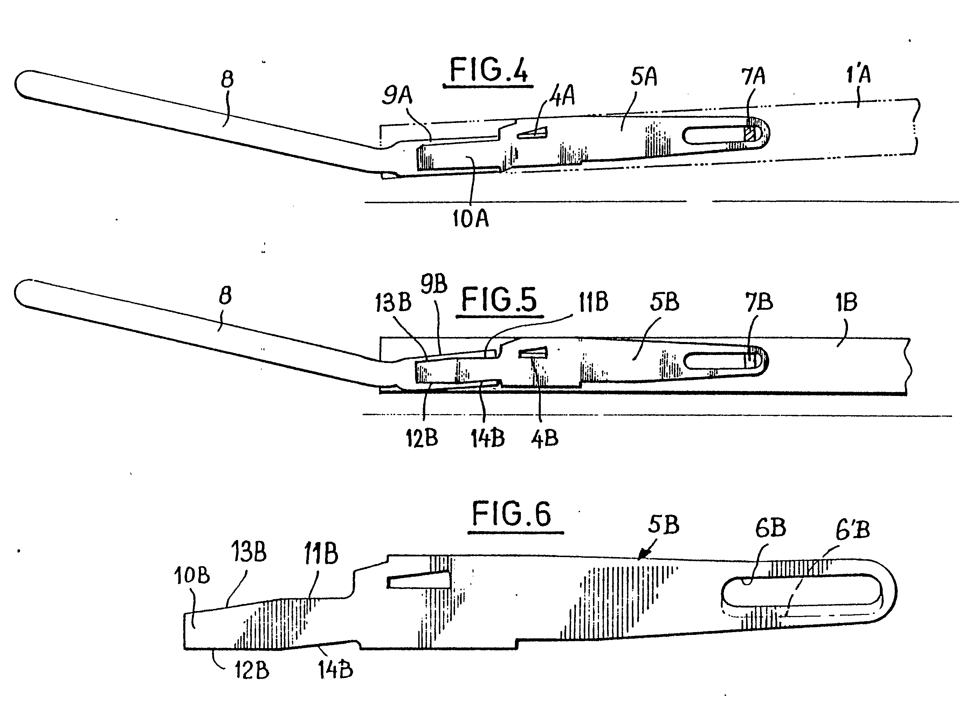

Ainsi, en service normal, l'arceau 8 est positionné par sa liaison rigide avec le levier intérieur 5A et, du côté extérieur, il s'appuie sur les demi-chants horizontaux 11B et 12B. En cas de choc frontal (Fig. 4 et 5), la paire de glissières intérieure 1A bascule seule vers l'avant, et les chanfreins 13B et 14B permettent à l'arceau 8 de suivre librement ce mouvement et donc à son extrémité intérieure 9A et au levier intérieur 5A de s'incliner de la même façon. Aucun déverrouillage de la paire de glissières intérieure n'est donc à craindre. L'angle des chanfreins 13B et 14B est bien entendu choisi suffisamment grand pour correspondre à la déformation différentielle maximale que l'on peut attendre entre les deux parties concernées du plancher du véhicule, l'inclinaison maximale de l'arceau étant définie par la venue de son extrémité 9B en butée sur les chanfreins 13B et 14B. A titre d'exemple, cet angle peut être de l'ordre de 10 à 15°, ou supérieur.

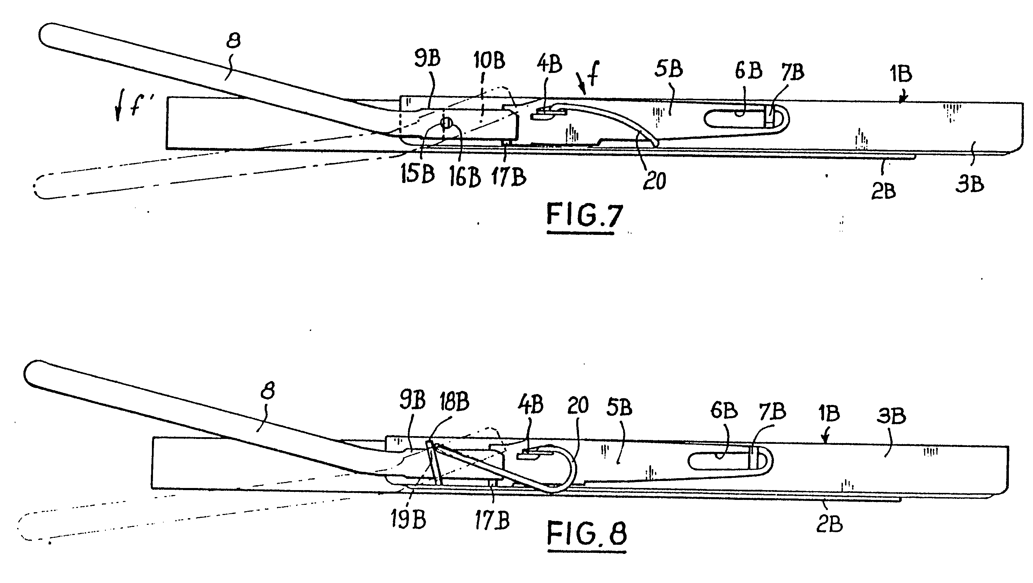

Dans le mode de réalisation de la Fig. 7, l'extrémité extérieure 9B de l'arceau n'est plus tubulaire mais plane et appliquée sur la face extérieure de la queue 10B. Cette dernière ne présente pas de chanfreins, mais un téton d'extrémité 15B rabattu à angle droit vers l'extérieur et traversant un trou circulaire 16B de l'extrémité 9B. De plus, à la racine de la queue 10B, le levier 5B présente un autre téton 17B rabattu à angle droit vers l'extérieur et sur lequel s'appuie normalement l'extrémité libre du bord inférieur de l'extrémité 9B.

Là encore, l'arceau n'est solidarisé avec le levier 5B que dans le sens f correspondant au déverrouillage de la paire de glissières 1B, mais est libre de s'incliner dans l'autre sens f', ici par rotation autour du téton 15B, comme illustré en traits mixtes. On obtient donc en cas de choc le même effet technique que celui décrit plus haut en regard des Fig. 3 à 6.

Le même type de liaison unidirectionnelle entre l'extrémité plane 9B et le levier 5B est obtenu, dans la variante de la Fig. 8, de la façon suivante : au lieu d'un téton 15B, la queue 10B présente à son extrémité sur toute sa hauteur une patte 18B rabattue à angle droit vers l'extérieur et percée d'une fenêtre rectangulaire 19B. Les dimensions de cette fenêtre correspondent à celles de la section de l'extrémité 9B, mais avec un axe incliné vers l'avant et vers le bas.

Ainsi, en service normal, l'extrémité 9B de l'arceau coopère avec les extrémités respectivement avant et arrière des bords supérieur et inférieur de la fenêtre 19B, et également avec le téton 17B. En cas de choc frontal, l'extrémité 9B peut s'incliner librement vers l'avant dans la mesure permise par la fenêtre 19B, comme illustré en traits mixtes.

On a représenté aux Fig. 7 et 8 deux variantes possibles de ressort de rappel 20 dont une extrémité traverse l'extrémité libre de la patte 4. L'autre extrémité du ressort attaque à la Fig. 7 l'extrémité arrière du levier 5 par le bas et, à la Fig. 8, la queue 10 et l'extrémité 9 de l'arceau par le haut.

On comprend par ailleurs que, en variante, le même effet technique serait obtenu en assurant à l'ensemble arceau 8-levier extérieur 5B une liberté de rotation dans le sens f' opposé au déverrouillage par rapport à l'ergot 7 de l'organe de verrouillage extérieur. Il suffirait pour cela que le levier 5B soit dépourvu de butée d'arrêt dans ce sens, que sa queue 10B soit identique à celle des Fig. 1 et 2, c'est-à-dire sans chanfreins, et que la boutonnière 6B soit élargie vers le bas, comme représenté en trait mixte en 6'B à la Fig. 6. Ceci suppose toutefois que l'organe de verrouillage extérieur possède son propre ressort de rappel vers sa position de verrouillage.

On pourrait encore envisager de réaliser l'arceau en deux parties reliées l'une à l'autre en son milieu par une liaison permettant une rotation relative, par exemple par un emmanchement tubulaire, ou bien de prévoir sur la chaîne cinématique reliant les deux paires de glissières par le mécanisme de déverrouillage un point affaibli de façon à se rompre en cas de basculement brusque vers l'avant de la paire de glissières intérieure par rapport à l'autre.

**Revendications**

1. Monture de siège de véhicule automobile du type comprenant deux paires de glissières (1A, 1B), respectivement intérieure et extérieure, comprenant chacune une glissière fixe (2A, 2B) solidaire du plancher du véhicule et une glissière mobile (3A, 3B) qui porte un levier de déverrouillage (5A, 5B) monté rotatif autour d'un axe horizontal, et un organe essentiellement rigide (8) d'actionnement synchronisé des deux leviers, caractérisée en ce qu'elle comprend des moyens (13B, 14B ; 15B à 17B ; 17B à 19B ; 6'B) qui permettent à la paire de glissières intérieure (1A), c'est-à-dire la plus proche de l'axe longitudinal (X-X) du véhicule, de basculer vers l'avant par rapport à l'autre paire de glissières (1B) dite extérieure en entraînant avec elle son levier intérieur (5A), au moins dans le cas d'un basculement relatif brusque, et, en ce que lesdits moyens permettent à l'extrémité extérieure (9B) de l'organe d'actionnement (8) de basculer librement vers l'avant par rapport au levier extérieur (5B) de la glissière extérieure (3B), en réalisant ainsi une liaison unidirectionnelle entre ledit levier (5B) et l'extrémité extérieure (9B), tandis que l'autre extrémité (9A) de cet organe est rigidement solidaire du levier intérieur (5A).

2. Monture suivant la revendication 1, caractérisée en ce que l'extrémité extérieure (9B) de l'arceau (8) est tubulaire et emmanchée sur l'extrémité avant (10B) du levier extérieur (5B), laquelle présente deux chanfreins (13B, 14B) parallèles et inclinés vers l'avant, le chanfrein supérieur (13B) étant décalé vers l'avant par rapport au chanfrein inférieur (14B).

3. Monture suivant la revendication 1, caractérisée en ce que l'extrémité extérieure (9B) de l'arceau (8) est articulée sur l'extrémité avant (10B) du levier extérieur (5B), et en ce qu'une butée (17B) l'empêche de basculer dans le seul sens du déverrouillage par rapport à ce levier.

4. Monture suivant la revendication 3, caractérisée en ce que l'articulation est obtenue au moyen d'un téton (15B) du levier extérieur (5B) traversant un trou (16B) de l'extrémité extérieure (9B) de l'arceau (8).

5. Monture suivant la revendication 3, caractérisée en ce que l'articulation est obtenue au moyen d'une patte d'extrémité (18B) du levier extérieur (5B) pourvue d'une fenêtre (19B) à axe incliné vers l'avant et vers le bas et traversée par l'extrémité extérieure (9B) de l'arceau (8).

6. Monture suivant la revendication 1, caractérisée en ce que lesdits moyens (6'B) permettent au levier extérieur (5B) de s'incliner vers l'avant par rapport à l'organe de verrouillage (7B) associé, chaque levier étant rigidement relié à l'arceau (8) et cet organe de verrouillage possédant des moyens de rappel propres vers sa position de verouillage.

7. Monture suivant la revendication 1, caractérisée en ce que l'arceau (8) est relié rigidement aux deux leviers (5) et est constitué de deux moitiés reliées l'une à l'autre avec possibilité de rotation, notamment par emmanchement tubulaire.

8. Monture suivant la revendication 1, caractérisée en ce que le mécanisme de déverrouillage possède un point affaibli de façon à céder en cas de basculement relatif brusque de la paire de glissières intérieure (1A) par rapport à l'autre (1B).

**Claims**

1. A seat mount for a motor vehicle, of the type comprising two pairs of respectively inner and outer slides (1A, 1B) each comprising a fixed slide (2A, 2B) connected to the floor of the vehicle, and a movable slide (3A, 3B) which carries an unlocking lever (5A, 5B) mounted to be rotatable about a horizontale axis, and an essentially rigid element (8) for synchronized actuation of the two levers, characterised in that it comprises means (13B, 14B ; 15B to 17B ; 17B to 19B ; 6'B) which permit the pair of inner slides (1A), i. e. those which are the closest to the longitudinal axis (X-X) of the vehicle, to pivot forwardly relative to the other pair of slides (1B), namely the inner pair, by carrying along therewith its inner lever (5A), at least in the case of a sudden relative pivoting, and said means permit the outer end (9B) of the actuating element (8) to pivot freely forwardly relative to the outer lever (5B) of the outer slide (3B) and thereby achieving a unidirectional connection between said lever (5B) and the outer end (9B), while the other end (9A) of this element is rigidly fixed to the inner lever (5A).

2. A mount according to claim 1, characterised in that the outer end (9B) of the arch element (8) is tubular and fitted on the front end (10B) of the outer lever (5B), which has two formardly inclined parallel bevels (13B, 14B), the upper bevel (13B) being forwardly offset relative to the lower bevel (14B).

3. A mount according to claim 1, characterised in that the outer (9B) of the arch element (8) is pivoted to the front end (10B) of the outer lever (5B), and an abutment (17B) prevents it from pivoting in the sole direction of the unlocking relative to this lever.

4. A mount according to claim 3, characterised in that the pivotal mounting is achieved by means of a lug (15B) of the outer lever (5B) extending through an aperture (16B) in the outer end (9B) of the arch element (8).

5. A mount according to claim 3, characterised in that the pivotal connection is achieved by means of an end tab (18B) of the outer lever (5B) provided with an opening (19B) having a forwardly and downwardly inclined axis and through which opening the outer end (9B) of the arch element (8) extends.

6. A mount according to claim 1, characterised in that said means (6'B) permit the outer lever (5B) to pivot forwardly relative to the associated locking element (7B), each lever being rigidly connected to the arch element (8) and this locking element having its own return means for returning it to its locking position.

7. A mount according to claim 1, characterised in that the arch element (8) is rigidly connected to the two levers (5) and is formed by two halves interconnected with possibility of rotation, in particular by a tubular fitting together.

8. A mount according to claim 1, characterised in that the unlocking mechanism has a weakened point so as to yield in the event of a sudden relative pivoting of the inner pair of slides (1A) relative to the other (1B).

**Patentansprüche**

1. Sitzgestell für Kraftfahrzeuge, mit zwei Paaren jeweils innerer und äußerer Gleitschienen (1A, 1B), die jeweils eine fest mit dem Fahrzeugboden verbundene stationäre Schiene (2A, 2B) und eine bewegliche Schiene (3A, 3B) umfassen, wobei letztere einen um eine horizontale Achse drehbaren Entriegelungshebel (5A, 5B) sowie ein im wesentlichen starres, mit den beiden Hebeln zusammenwirkendes Betätigungsorgan (8) aufweist, gekennzeichnet durch Einrichtungen (13B, 14B, 15B bis 17B ; 17B bis 19B ; 6'B), welche zumindest im Falle einer plötzlichen Relativverschwenkung eine Kippbewegung der beiden inneren Gleitschienen (1A), das heißt des Schienenpaares, welches der Längsachse (X-X) des Fahrzeugs am nächsten angeordnet ist, nach vorn auf das andere, äußere Schienenpaar (1B) unter Betätigung von dessen inneren Hebel (5A) ermöglichen, sowie dadurch, daß aufgrund der genannten Einrichtungen das äußere Ende (9B) des Betätigungsorgans (8) in bezug auf den äußeren Hebel (5B) der äußeren Schiene (3B) zur Herstellung einer Verbindung zwischen dem Hebel (5B) und dem äußeren Ende (9B) in einer Richtung nach vorn frei verschwenkbar ist, während das andere Ende (9A) dieses Organs starr mit dem inneren Hebel (5A) verbunden ist.

2. Gestell nach Anspruch 1, dadurch gekennzeichnet, daß das äußere Ende (9B) des Bügels (8) röhrenförmig ausgebildet und auf das vordere Ende (10B) des äußeren Hebels (5B) aufschiebbar ist, wobei dieses Ende parallele und nach vorn geneigte Keilschrägungen (13B, 14B) aufweist und die obere Keilschrägung (13B) gegenüber der unteren Keilschrägung (14B) versetzt angeordnet ist.

3. Gestell nach Anspruch 1, dadurch gekennzeichnet, daß das äußere Ende (9B) des Bügels (8) an das vordere Ende (10B) des äußeren Hebels (5B) angelenkt ist und daß ein Anschlag (17B) ein Verschwenken desselben gegenüber dem Hebel nur in Entriegelungsrichtung verhindert.

4. Gestell nach Anspruch 3, dadurch gekennzeichnet, daß die Anlenkung über einen Zapfen (15B) des äußeren Hebels (5B) erfolgt, welcher durch eine Bohrung (16B) des äußeren Endes (9B) des Bügels (8) hindurchgeht.

5. Gestell nach Anspruch 3, dadurch gekennzeichnet, daß die Anlenkung über eine Nase (18B) des äußeren Hebels (5B) erfolgt, welche mit einem Fenster (19B) mit nach vorn und nach unten geneigter Achse versehen ist, durch welches das äußere Ende (9B) des Bügels (8) hindurchgeht.

6. Halterung nach Anspruch 1, dadurch gekennzeichnet, daß aufgrund der Einrichtungen (6'B) der äußere Hebel (5B) gegenüber dem zugehörigen Verriegelungselement (7B) nach vorn verschwenkbar ist, wobei jeder Hebel starr mit dem Bügel (8) verbunden ist und das Verriegelungselement entsprechende Einrichtungen zum Zurückholen in seine Verriegelungsstellung aufweist.

7. Gestell nach Anspruch 1, dadurch gekennzeichnet, daß der Bügel (8) starr mit den beiden Hebeln (5) verbunden ist und aus zwei Hälften besteht, welche drehbar miteinander verbunden sind, insbesondere durch die Aufeinanderschiebbarkeit aufgrund ihrer röhrenförmigen Ausbildung.

8. Gestell nach Anspruch 1, dadurch gekennzeichnet, daß der Entriegelungsmechanismus eine Schwachstelle aufweist, um ein Nachgeben im Falle eines plötzlichen Relativverschwenkens des inneren Gleitschienenpaares (1A) gegenüber dem anderen Gleitschienenpaar (1B) zu ermöglichen.

**FIG.1**

**FIG.2**

**FIG.3**

## FIG.4

8  9A  4A  5A  7A  1'A

10A

## FIG.5

8  13B  9B  11B  5B  7B  1B

12B  14B  4B

## FIG.6

10B  13B  11B  5B  6B  6'B

12B  14B

9B  10B  4B  ↓f  5B  6B  7B  1B

↓f'  8

15B  16B  17B  20  2B  3B

FIG.7

9B  18B  4B  20  5B  6B  7B  1B  3B

8

19B  17B  2B

FIG.8

0 096 632

3